# EUROPÄISCHE PATENTSCHRIFT

(11) **EP 1 065 579 B1**
(45) Veröffentlichungstag und Bekanntmachung des Hinweises auf die Patenterteilung: **28.08.2002**
(21) Anmeldenummer: 99122846.1
(22) Anmeldetag: 17.11.1999
(51) Int. Cl.: G05D 1/02, G01S 5/02, G09B 29/10

(54) **Selbstfahrendes Fahrzeug**
Automotive vehicle
Véhicule autopropulsé

(43) Veröffentlichungstag der Anmeldung: 03.01.2001
(73) Patentinhaber: Bail GmbH, 82467 Garmisch-Partenkirchen (DE)
(72) Erfinder: Bail, Günther, Dr., 82467 Garmisch-Partenkirchen (DE)
(74) Vertreter: Flosdorff, Jürgen, Dr.

(56) Entgegenhaltungen:
- EP-A- 0 489 915
- EP-A- 0 782 723
- PATENT ABSTRACTS OF JAPAN vol. 1997, no. 03, 31. März 1997 (1997-03-31) & JP 08 293093 A (FUJITSU GENERAL LTD), 5. November 1996 (1996-11-05)

## Beschreibung

Die Erfindung betrifft ein selbstfahrendes Fahrzeug, das mit einer Empfangs- und Auswerteeinrichtung für Positionssignale ausgerüstet ist, so daß es ständig Informationen über die Koordinaten seines jeweiligen Standortes erhalten kann.

Die EP-A-0 489 915 offenbart ein Navigationssystem für den Fahrer eines Kraftfahrzeugs. Mit diesem Navigationssystem soll das alte Kartenanzeigesystem, das zu Sicherheitsproblemen führt, und das herkömmliche Pfeilanzeigesystem verbessert werden, dessen Nachteil darin liegt, daß der Fahrer häufig zu früh von der gerade befahrenen Straße nach rechts oder links abbiegt. Die offenbarte Erfindung sieht vor, daß das Navigationssystem des Kraftfahrzeugs die Fahrtroute anzeigt, durch die das Fahrzeug gerade fährt, zusammen mit Informationen über die Zielposition. Diese Fahrlinie wird auf dem Bildschirm angezeigt.

Auch die JP-A-8293093 befaßt sich mit Informationen für den Fahrer eines Kraftfahrzeugs, wobei Verkehrsstaus nach Ort und Zeit gespeichert und zusammen mit der durch ein Satellitennavigationssystem ermittelten jeweiligen Position des Kraftfahrzeugs auf einer Straßenkarte angezeigt werden. Hierdurch ist der Fahrer in der Lage, Verkehrsstaus zu umfahren.

Aus der EP-A-0 782 723 ist ein selbstfahrendes Fahrzeug bekannt, das automatisch einer mobilen Sendeeinrichtung folgen kann. Bei dem Fahrzeug kann es sich um einen Golfcaddy handeln, der einem Golfspieler folgt, der die mobile Sendeeinrichtung trägt. Sowohl das Fahrzeug als auch die mobile Sendeeinrichtung sind mit einer mit einem Rechner versehenen Empfangs- und Auswerteeinrichtung für ein Satelliten-gesteuertes Positioniersystem ausgerüstet. Die mobile Sendeeinrichtung übermittelt mittels eines HF-Handsenders in regelmäßigen Zeitabständen ihre jeweilige Position an das Fahrzeug, das diese Position mit der eigenen Position vergleicht und daraus die Fahrstrecke errechnet.

Die vorliegende Erfindung befaßt sich nicht mit dem Problem, daß ein selbstfahrendes Fahrzeug einer mobilen Sendeeinrichtung auf ihrem Weg folgen soll, sondern das Fahrzeug soll eine (oder mehrere) vorher festgelegt Strecke exakt nachfahren können.

Dieses Problem wird durch die Merkmale der Patentansprüche 1 und 11 gelöst. Vorteilhafte Ausgestaltungen der Erfindung sind in den abhängigen Ansprüchen gekennzeichnet.

Das erfindungsgemäße System zum Steuern eines selbstfahrenden Fahrzeugs sieht als ersten Schritt vor, daß in den Datenspeicher des Fahrzeugs die Positionsdaten einer ausgewählten Strecke von einem Standort zu einem Zielort eingegeben werden. Dabei ist in einer Ausführungsform vorgesehen, daß die Positionsdaten der abzufahrenden Strecke direkt eingegeben bzw. einprogrammiert werden, ohne daß hierzu die Strecke abgefahren wird.

In einer anderen Ausführungsform der Erfindung erfolgt dieser erste Schritt folgendermaßen: Das Fahrzeug fährt zunächst, vorzugsweise mit Hilfe einer Führungsperson, eine ausgewählte Strecke von einem Startort zu einem Zielort ab, wobei das Fahrzeug in bevorzugt gleichmäßigen Zeitabständen von beispielsweise 1 s Positionssignale von einem Positioniersystem empfängt und diese als Datenfolge in einem Datenspeicher ablegt. Damit hat das Fahrzeug die Koordinaten von beliebig dicht beieinander liegenden Punkten der Wegstrecke gespeichert.

Zum automatischen Nachfahren dieser einprogrammierten Strecke empfängt das Fahrzeug ein akutelles Positionssignal, das der Rechner des Fahrzeugs mit der einprogrammierten Position des Startortes der Fahrstrecke vergleicht. Stimmen die beiden Positionen nicht überein, werden Richtung und Abstand zu dem Startort errechnet, woraufhin die Steuereinrichtung des Fahrzeugs so tätig wird, daß das Fahrzeug zum Startort fährt. .

Das Fahrzeug empfängt in vorgegebenen zeitlichen Abständen von dem Positioniersystem seine jeweils aktuellen Positionsdaten, die jeweils mit der nächsten gespeicherten Position der Fahrstrecke verglichen werden. Punkt für Punkt werden Richtung und Abstand zur nächsten vorgegebenen Position errechnet, und die Antriebseinrichtung und Steuerung so betätigt, daß die vorprogrammierte Strecke abgefahren wird.

Dadurch, daß das Fahrzeug in kurzer zeitlicher Folge von dem Positioniersystem Signale empfängt, aus denen die Auswerteeinrichtung die jeweils akutelle Position des Fahrzeugs errechnet, kann das Fahrzeug mit großer Genauigkeit den gespeicherten Positionen der gewünschten Fahrstrecke folgen, da Abweichungen von der gewünschten Strecke sofort erfaßt und korrigiert werden.

Bei dem Positioniersystem, dessen Signale das Fahrzeug empfängt, kann es sich um ein Satelittennavigationssystem wie das GPS-System handeln. Bei dem erfindungsgemäßen System kann außerdem ein feststehender Referenzsender vorhanden sein, der ebenfalls Positionssignale an das Fahrzeug sendet, so daß dessen Auswerteeinrichtung die von dem Satellittennavigationssystem erhaltenen Positionsdaten korrigieren kann, so daß die im Bereich einiger Meter liegenden Ungenauigkeiten der Positionsdaten eines Satelittennavigationssystems korrigiert werden und das Fahrzeug stets seine exakten Positionskoordinaten errechnet.

Mit dem erfindungsgemäßen System kann beispielsweise ein Transportfahrzeug oder auch ein Rasenmäher eine ausgewählte Fahrstrecke zu gewünschten Zeitpunkten exakt nachfahren, ohne daß hierzu die Hilfe einer Arbeitsperson erforderlich ist.

Nach einem weiteren Vorschlag der Erfindung ist das Fahrzeug mit Sensoren ausgerüstet, die in seiner Bahn befindliche Hindernisse erkennen können. Diese Sensoren können beispielsweise Mikrowellen/Ultraschall- und/oder Infrarotsender sein.

Wenn sich auf der Fahrstrecke ein Hindernis, beispielsweise ein Tier oder ein abgestelltes Fahrzeug befindet, ist bevorzugt vorgesehen, daß das Fahrzeug stoppt und eine vorgegebene Zeitspanne lang in dieser Ruhestellung bleibt und seine Fahrt erst dann fortsetzt, wenn sich das Hindernis entfernt hat. Für den Fall, daß dies nicht geschieht, kann die Steuereinrichtung das Fahrzeug auf einer definierten Ausweichbahn um das Hindernis herumführen, wobei aufgrund des nächsten empfangenen aktuellen Positionssignals die Fahrstrecke zu dem nächsten hinter dem Hindernis liegenden gespeicherten Streckenpunkt ermittelt wird.

Neu auftretende Hindernisse werden mit einem Sicherheitsabstand umfahren, während bei ständig in der Bahn liegenden, festen Hindernissen ein praktikabler Abstand vorgegeben werden kann.

Wenn das Fahrzeug seine Position mit Hilfe eines Satelittennavigationssystems bestimmt, kann es nur im Freien eine vorgegebene Wegstrecke nachfahren. Erfindungsgemäß wird in diesem Zusammenhang vorgeschlagen, daß anstelle eines Satelittennavigationssystems ein lokales Positionierungssystem verwendet werden kann, das z.B. mit vier Referenzsendern einen Raum wie z.B. eine Fabrikhalle oder Verkaufshalle abdeckt und damit jeden Punkt in diesem Raum geographisch definiert. Dabei senden innerhalb eines Gebäudes beispielsweise vier Antennen Impulse aus, die von der Empfangs- und Auswerteeinrichtung des Fahrzeugs zur Bestimmung seiner jeweiligen Koordinaten in dem Raum in der Weise ausgewertet werden, wie dies bei einem Satelittennavigationssystem der Fall ist. Mit einem solchen lokalen Positionierungssystem kann z.B. eine Großreinigungsmaschine eine Halle auf einer vorgegebenen Strecke zunächst mit Hilfe einer Führungsperson durchfahren, wobei die Positionsdaten dieser Wegstrecke in dem Speicher der Maschine abgelegt werden, woraufhin nachfolgend die Reinigungsmaschine die Wegstrecke exakt nachfährt, ohne daß es hierzu einer Führungsperson bedarf.

Ein derartiges lokales Positioniersystem mit eigenen Referenzsendern ist aber auch im Freien, beispielsweise auf einem Golfplatz oder im Garten anwendbar, so daß auf ein Satelittennavigationssystem verzichtet werden kann. Das lokale Positionierungssystem ist auch für den Fall verwendbar, daß ein Fahrzeug automatisch einem beweglichen Sender folgen soll.

## Patentansprüche

1. System zum Steuern eines selbstfahrenden Fahrzeugs, **gekennzeichnet durch** folgende Schritte:
a) in den Datenspeicher des Fahrzeugs werden die Positionsdaten einer ausgewählten Strecke von einem Startort zu einem Zielort eingegeben;
b) das Fahrzeug fährt später die vorgegebene Strecke selbsttätig ab, indem es
b1) an einem Ausgangspunkt von einem Positioniersystem das zugehörige aktuelle Positionssignal empfängt, dieses mit der gespeicherten Position des Startortes vergleicht und
- wenn die Positionsdaten nicht übereinstimmen - hieraus Richtung und Abstand zu dem Startort errechnet und diese Strecke abfährt und
b2) daraufhin nacheinander aktuelle Positionsdaten empfängt und jeweils Richtung und Abstand zur nächsten gespeicherten Position errechnet und die zugehörige Strecke abfährt.

2. System nach Anspruch 1,
**dadurch gekennzeichnet,**
**daß** Schritt a) dadurch erfolgt, daß die Positionsdaten der abzufahrenden Strecke direkt einprogrammiert werden.

3. System nach Anspruch 1,
**dadurch gekennzeichnet,**
**daß** Schritt a) dadurch erfolgt, daß
a1) das Fahrzeug eine ausgewählte Strecke von einem Startort zu einem Zielort abfährt und
a2) das Fahrzeug dabei in zeitlichen Abständen Positionssignale von einem Positioniersystem enpfängt und diese in einem Datenspeicher ablegt.

4. System zum Steuern nach einem der Ansprüche 1 bis 3,
**dadurch gekennzeichnet, daß** das Positioniersystem ein Satellitennavigationssystem wie das GPS-System ist.

5. System zum Steuern nach einem der Ansprüche 1 bis 4,
**dadurch gekennzeichnet, daß** das Fahrzeug außerdem Positionssignale von einem feststehenden Referenzsender erhält und daraus seine korrigierten, exakten Positionsdaten ermittelt.

6. System zum Steuern nach einem der Ansprüche 1 bis 3,
**dadurch gekennzeichnet, daß** das Positioniersystem ein lokales Positioniersystem ist.

7. System zum Steuern nach Anspruch 6,
**dadurch gekennzeichnet, daß** das Fahrzeug die Fahrstrecke innerhalb eines Gebäudes abfährt.

8. System zum Steuern nach einem der Ansprüche 1 bis 7,
**dadurch gekennzeichnet, daß** das Fahrzeug mit Sensoren ein Hindernis auf der Fahrstrecke erfaßt.

9. System zum Steuern nach Anspruch 8,
**dadurch gekennzeichnet, daß** das Fahrzeug nach dem Erfassen eines Hindernisses stoppt.

10. System zum Steuern nach Anspruch 8 oder 9,
**dadurch gekennzeichnet, daß** das Fahrzeug ein im Weg stehendes Hindernis auf einer vorprogrammierten Bahn umfährt.

11. Selbstfahrendes Fahrzeug nach einem der Ansprüche 1 bis 10,
enthaltend eine Positionssignalempfangseinrichtung, eine mit einem Rechner versehene Auswerteeinrichtung für die empfangenen Positionsdaten, eine Speichereinrichtung für die Positionsdaten, eine Antriebseinrichtung und eine Steuereinrichtung, mit der das Fahrzeug die Positionen einer vorgegebenen Fahrstrecke abfährt.

## Claims

1. System for controlling an automotive vehicle,
**characterised by** the following steps:
a) the position data of a selected route from a starting location to a destination are entered in the data store;
b) the vehicle subsequently automatically covers the predetermined route in that it
b1) receives the associated actual position signal from a positioning system at a starting point, compares this signal with the stored position of the starting location and
- if the position data do not correspond - calculates on this basis the direction and the distance to the starting location and covers this route and
b2) afterwards receives actual position data in succession and in each case calculates the direction and the distance to the next stored position and covers the associated route..

2. System according to Claim 1,
**characterised in**
**that** step a) is executed by directly programming in the position data of the route which is to be covered.

3. System according to Claim 1,
**characterised in**
**that** step a) is executed by
a1) the vehicle covering a selected route from a starting location to a destination and
a2) the vehicle at the same time receiving position signals from a positioning system at time intervals and storing these in a data store.

4. System for controlling according to any one of Claims 1 to 3,
**characterised in that** the positioning system is a satellite navigation system like the GPS system.

5. System for controlling according to any one of Claims 1 to 4,
**characterised in that** the vehicle also receives position signals from a stationary reference transmitter and determines from these signals its corrected, exact position data.

6. System for controlling according to any one of Claims 1 to 3,
**characterised in that** the positioning system is a local positioning system.

7. System for controlling according to Claim 6,
**characterised in that** the vehicle covers the route inside a building.

8. System for controlling according to any one of Claims 1 to 7,
**characterised in that** the vehicle detects an obstacle on the route by means of sensors.

9. System for controlling according to Claim 8,
**characterised in that** the vehicle stops after detecting an obstacle.

10. System for controlling according to Claim 8 or 9,
**characterised in that** the vehicle circumvents an obstacle in the way along a pre-programmed path.

11. Automotive vehicle according to any one of Claims 1 to 10,
containing a position signal receiving device, an evaluation device provided with a computer for the received position data, a storage device for the position data, a drive device and a control device, by means of which the vehicle covers the positions of a predetermined route.

## Revendications

1. Système de commande d'un véhicule autopropulsé, **caractérisé par** les étapes suivantes :
a) dans la mémoire du véhicule, on entre les données de position d'un trajet sélectionné d'un lieu de départ à un lieu à atteindre ;
b) le véhicule parcourt ultérieurement le trajet prédéterminé automatiquement en
b1) ce qu'il reçoit à un point de départ d'un système de positionnement le signal de position actuel associé, le compare avec la position stockée du lieu de départ et
- lorsque les données de position ne coïncident pas - calcule à partir de celles-ci la direction et l'écart relativement au lieu de départ et parcourt ce trajet et
b2) reçoit ensuite successivement des données de position actuelles et calcule respectivement la direction et l'écart relativement à la prochaine position stockée et parcourt le trajet associé.

2. Système selon la revendication 1, **caractérisé en ce que** l'étape a) est exécutée **en ce que** les données de position du trajet à parcourir sont programmées directement.

3. Système selon la revendication 1, **caractérisé en ce que** l'étape a) est exécutée **en ce que**
a1) le véhicule parcourt un trajet sélectionné d'un lieu de départ à un lieu à atteindre et
a2) ce faisant, le véhicule reçoit à des intervalles des signaux de position d'un système de positionnement et stocke ceux-ci dans une mémoire de données.

4. Système de commande selon l'une des revendications 1 à 3, **caractérisé en ce que** le système de positionnement est un système de navigation par satellite comme le système GPS.

5. Système de commande selon l'une des revendications 1 à 4, **caractérisé en ce que** le véhicule reçoit de plus des signaux de position d'un émetteur de référence fixe et détermine à partir de ceux-ci ses données de position corrigées exactes.

6. Système de commande selon l'une des revendications 1 à 3, **caractérisé en ce que** le système de positionnement est un système de positionnement local.

7. Système de commande selon la revendication 6, **caractérisé en ce que** le véhicule parcourt le trajet à l'intérieur d'un bâtiment.

8. Système de commande selon l'une des revendications 1 à 7, **caractérisé en ce que** le véhicule détecte avec des capteurs un obstacle sur le trajet à parcourir.

9. Système de commande selon la revendication 8, **caractérisé en ce que** le véhicule s'arrête après la détection d'un obstacle.

10. Système de commande selon la revendication 8 ou 9, **caractérisé en ce que** le véhicule contourne un obstacle sur son chemin sur une trajectoire programmée préalablement.

11. Véhicule autopropulsé selon l'une des revendications 1 à 10, comportant une installation de réception de signaux de position, une installation d'évaluation pourvue d'un calculateur pour les données de position reçues, une installation de mémorisation des données de position, une installation d'entraînement et une installation de commande avec laquelle le véhicule parcourt les positions d'un trajet prédéterminé à parcourir.
